# EUROPÄISCHE PATENTSCHRIFT

(11) **EP 0 607 503 B1**
(45) Veröffentlichungstag und Bekanntmachung des Hinweises auf die Patenterteilung: **29.01.1997**
(21) Anmeldenummer: 93116111.1
(22) Anmeldetag: 06.10.1993
(51) Int. Cl.: B61D 17/22, B60D 5/00, B23Q 11/08, B32B 5/26, D03D 15/02, F16P 3/02

(54) **Mehrlagig aufgebauter Mantel eines Faltenbalges**
Multi-layered wall of a bellows
Paroi multi-couche d'un soufflet

(30) Priorität: 21.12.1992 DE 9217352 U
(43) Veröffentlichungstag der Anmeldung: 27.07.1994
(73) Patentinhaber: HÜBNER Gummi- und Kunststoff GmbH, D-34123 Kassel (DE)
(72) Erfinder:
(74) Vertreter: Walther, Robert, Dipl.-Ing.

(56) Entgegenhaltungen:
- EP-A- 0 206 910
- EP-A- 0 297 936

## Beschreibung

Mehrlagig aufgebauter Mantel eines Faltenbalges für einen flexiblen Übergang.

Die Erfindung betrifft einen mehrlagig aufgebauten Mantel eines Faltenbalges für einen flexiblen Übergang mit einer schneidresistenten Einlage.

Faltenbälge für flexible Übergänge sind beispielsweise bei Schienenfahrzeugen und Bussen bekannt. Derartige Faltenbälge finden allerdings auch Anwendung bei sogenannten Fahrgastbrücken auf Flughäfen. Diese Faltenbälge sind anfällig für Vandalismus. Die Zerstörung derartiger Faltenbälge erfolgt insbesondere durch Aufschneiden mit Messern oder ähnlichen Gegenständen.

Aus der EP 0 297 936 A1 ist ein verformbarer Boden für einen flexiblen Übergang bekannt, der als Verstärkungselemente ausgebildete, metallische Einlagen aufweist. Diese metallischen Einlagen dienen der Verstärkung des verformbaren Bodens, so daß dieser eine ausreichende Steifig- und Festigkeit aufweist, um die darauf laufenden Personen zu tragen.

Der Erfindung liegt daher die Aufgabe zugrunde, einen Mantel für einen Faltenbalg zu schaffen, der jeglichen Schnittversuchen größtmöglichen Widerstand bietet.

Die Aufgabe wird erfindungsgemäß dadurch gelöst, daß der Mantel ein beschichtetes Gewebe aufweist, das an die Einlage aus Metallschichten oder Fäden angrenzt bzw. die Schicht bildet, auf oder in die die Einlage auf- oder einvulkanisiert ist. D.h., das beschichtete Gewebe bildet in diesem Fall die Trägerschicht für die Einlage.

Ein erfindungsgemäß ausgebildeter Mantel hat eine schneidresistente Einlage, beispielsweise aus Metalldrähten. Denkbar sind auch Fäden aus hochfestem Kunststoff, z.B. Karbonfasern.

Die Einlage kann erfindungsgemäß als Gewebe, Gewirke, Gestricke oder auch als Vlies ausgebildet sein. Durch eine derartige Einlage wird bereits das Eindringen mit einem Messer, darüber hinaus aber auch der Schneidvorgang durch das Messer erschwert.

Nach einem besonderen Merkmal der Erfindung ist die Einlage aus Metalldrähten oder Fäden in einer Schicht aus elastisch nachgiebigem Material, z.B. einer zähen Gummimischung, derart ein- oder aufvulkanisiert, daß die Drähte oder Fäden der Einlage unter Zugbeanspruchung z.B. mittels eines Messers sich einzeln lösen können, und die beim Schneidvorgang nach unten gedrückten Fäden aufeinander auflaufen, bei gleichzeitig hoher Haftung der Einlage in bzw. auf der Gummimasse. D.h. die Fäden oder Drähte werden ohne zu reißen zusammengedrückt. Bei einem derartigen Aufbau eines Mantels passiert beim Schneiden mittels eines Messers oder eines ähnlichen Gegenstandes also folgendes:

Das Messer dringt, wenn auch unter Schwierigkeiten, durch die Einlage hindurch; wird dann das Messer nach unten gezogen, wird der erste quer zur Schnittrichtung verlaufende Metalldraht oder Faden von der Schneide mitgenommen. Ein Reißen oder Durchtrennen des Metalldrahtes oder Fadens wird dadurch verhindert, daß der Metalldraht in dem elastisch nachgiebigem Material ein- oder aufvulkanisiert ist, so daß er bei Beanspruchung elastisch mitgenommen wird. Dieser Metalldraht oder Faden läuft bei weiterem Herabziehen des Messers auf den nächsten quer zur Schnittrichtung verlaufenden Metalldraht oder Faden auf, diese beiden Drähte oder Fäden dann auf den übernächsten usw. Bei einem Auflaufen von drei oder vier Drähten bzw. Fäden aufeinander wird der Messerschneide ein derartiger Widerstand in Form einer Barriere geboten, die aufgrund ihrer Stärke durch die drei oder vier Drähte oder Fäden nicht mehr durchtrennbar ist, bzw. der Kraftaufwand für einen fortgesetzten Schneidvorgang aufgrund der elastisch-nachgiebigen Einbindung der Drähte oder Fäden zu groß wird.

Die Zähigkeit des Mantels und damit der erforderliche Kraftaufwand beim Schneidvorgang wird insbesondere dann noch weiter erhöht, wenn die Einlage als Gestricke oder Gewirke ausgebildet ist, da wegen der Maschenbildung ein zusätzlicher Widerstand gegeben ist.

Vorteilhaft ist der Einlage ein Vlies, beispielsweise aus Filz, hinterlegt; dieses Vlies dient nicht nur der Wärmedämmung, sondern erschwert auch das Durchdringen eines Messers.

Zum Zwecke der Herstellung eines Mantels mit Hilfe eines Kalanders ist die Einlage aus Metalldrähten oder hochfesten Fäden kaschiert, um eine Beschädigung der Walzen des Kalanders zu vermeiden. Im einzelnen ist die Einlage auf ihrer einen Seite durch ein beschichtetes Gewebe und auf ihrer anderen Seite durch ein Vlies, beispielsweise aus Nadelfilz, kaschiert, wobei das Vlies nach Durchlaufen des Kalanders abgezogen werden kann. Sofern die Kaschierung verbleibt, bildet sie - wie oben bereits beschrieben - eine zusätzliche Wärmedämmung, bzw. ein zusätzliches Hemmnis beim Durchstechen des Mantels.

Anhand der nachstehenden Zeichungen wird die Erfindung beispielhaft erläutert.
Fig. 1 zeigt einen Querschnitt durch den Mantel eines Faltenbalges;
Fig. 2 zeigt schematisch den Verlauf der Fäden oder Drähte beim Schnitt.

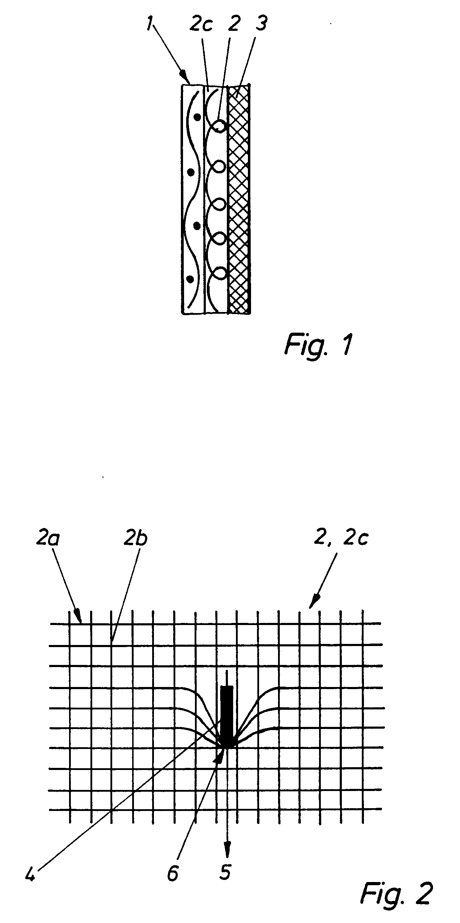

Gemäß Fig. 1 besteht der Mantel aus einem beschichteten Gewebe 1, der aus Metalldrähten bestehenden Einlage 2 und dem Vlies 3 aus Nadelfilz. Insbesondere das beschichtete Gewebe 1 und die Einlage 2 sind durch einen Vulkanisationsvorgang miteinander verbunden. Das Vlies 3 aus Nadelfilz ist aufkaschiert.

Fig. 2 zeigt schematisch, wie sich die horizontal verlaufenden Metalldrähte eines Metallgewebes verhalten, wenn versucht wird, das Gewebe mit Hilfe eines Messers aufzutrennen. Die hier gezeigte gewebte Einlage, ist auf ein elastisch nachgiebiges Material z.B. Gummi oder gummiartiges Gewebe ein- bzw. aufvulkanisiert, daß einerseits das Nachgeben der Einzelfäden oder Drähte, andererseits die Haftung der gesamten Einlage im Gummi gewährleistet ist.

Das Gewebe besteht aus horizontal verlaufenden Metalldrähten 2a und vertikal verlaufenden Metalldrähten 2b. Die Messerschneide ist mit 4 bezeichnet. Bei Bewegung der Messerschneide 4 in Richtung des Pfeiles 5 laufen die Fäden 2a aufeinander auf und bilden für die Schneide 4 bei 6 eine nicht durchtrennbare Barriere.

Diese Barrierenbildung bei 6 wird noch dann verstärkt, wenn ein Gewirke oder Gestricke als Einlage verwendet wird; in diesem Fall nämlich sind die einzelnen Fäden oder Drähte durch Maschen miteinander verbunden. D.h., daß hierbei eine noch höhere Hemmung für die Schneide bei Bewegung in Richtung des Pfeiles 5 erfolgt, als bei einem normalen Gewebe oder lediglich horizontal verlaufenden Metalldrähten oder Fäden.

## Patentansprüche

1. Mehrlagig aufgebauter Mantel eines Faltenbalges für einen flexiblen Übergang mit einer schneidresistenten Einlage,
**dadurch gekennzeichnet**, daß
der Mantel ein beschichtetes Gewebe (1) aufweist, das an die Einlage (2) aus Metalldrähten oder Fäden angrenzt und die Trägerschicht für die Einlage (2) bildet.

2. Mantel nach Anspruch 1,
**dadurch gekennzeichnet,** daß
die Einlage (2) aus Metalldrähten oder Fäden aus hochfestem Kunststoff besteht.

3. Mantel nach Anspruch 2,
**dadurch gekennzeichnet**, daß
die Einlage (2) als Gewirke, Gewebe, Gestricke oder Vlies ausgebildet ist.

4. Mantel nach Anspruch 2,
**dadurch gekennzeichnet**, daß
die Einlage (2) in einer Schicht (2c) aus elastisch nachgiebigem Material derart ein- oder aufvulkanisiert ist, daß die Drähte oder Fäden (2a) der Einlage unter Zugbeanspruchung aufeinander auflaufen, wobei die Fixierung der Einlage als Ganzes gewährleistet ist.

5. Mantel nach Anspruch 2,
**dadurch gekennzeichnet**, daß
der Einlage (2) ein Vlies (3), beispielsweise aus Filz, hinterlegt ist.

6. Verfahren zur Herstellung eines mehrlagig aufgebauten Mantels eines Faltenbalges für einen flexiblen Übergang mit einer schneidresistenten Einlage durch einen Kalander,
**dadurch gekennzeichnet**, daß
die Einlage (2) aus Metalldrähten oder Kunststoffäden während des Durchlaufs durch den Kalander kaschiert ist.

7. Verfahren nach Anspruch 6,
**dadurch gekennzeichnet**, daß
die Einlage (2) auf ihrer einen Seite durch ein beschichtetes Gewebe (1) und auf ihrer anderen Seite durch ein Vlies (3), z. B. aus Filz, kaschiert ist.

8. Verfahren nach Anspruch 6,
**dadurch gekennzeichnet**, daß
das Vlies (3) nach Durchlaufen des Kalanders abgezogen wird.

## Claims

1. Multilayer cover of a bellow for a flexible connecting corridor with a cutproof insert,
**characterized in that**
the cover has a coated fabric (1) adjacent to the insert (2) made of metallic wires or fibres and forming the supporting layer for the insert (2).

2. Cover according to claim 1,
**characterized in that**
the insert (2) consists in metallic wires or fibres made of highly solid synthetic material.

3. Cover according to claim 2,
**characterized in that**
the insert (2) is designed as fabric, knitted fabric or as fleece.

4. Cover according to claim 2,
**characterized in that**
the insert (2) in a layer (2c) of ductile, elastic material is vulcanized in such a way that the wires or fibres (2a) of the insert can, in case of tension, be pressed together, whereas the fixing of the insert as a whole is guaranteed.

5. Cover according to claim 2,
**characterized in that**
the insert (2) is backed by a fleece (3), for example made of felt.

6. Procedure for manufacturing a multilayer cover of a bellows for a flexible connecting corridor with a cutproof insert by means of a calander,
**characterized in that**
the insert (2) made of metallic wires or synthetic fibres is covered when passing through the calander.

7. Procedure according to claim 6,
**characterized in that**
the insert (2) is covered on one side by a coated fabric (1) and on its other side by a fleece (3), e.g. made of felt.

8. Procedure according to claim 6,
**characterized in that**
the fleece is pulled off after having passed through the calander.

## Revendications

1. Jupe multicouche d'un soufflet pour un couloir flexible de communication avec une couche intercalaire résistante aux coupures,
**caractérisée en ce que**
la jupe est pourvue d'un tissu enduit (1) adjacent a la couche intercalaire (2) faite de filaments métalliques ou de fibres et qui forme la couche de support pour la couche intercalaire (2).

2. Jupe selon la revendicaiton 1,
**caractérisée en ce que**
la couche intercalaire (2) est faite de filaments métalliques ou de fibres synthétiques très solides.

3. Jupe selon la revendicaiton 2,
**caractérisée en ce que**
la couche intercalaire (2) est conçue comme tricot, tissu ou voile.

4. Jupe selon la revendication 2,
**caractérisée en ce que**
la couche intercalaire (2) est vulcanisée dans ou sur une couche (2c) d'un matériau élastique souple de telle sorte que les filaments ou fibres (2a) de la couche intercalaire sont pressés les uns contre les autres lors d'une sollicitation, la fixation de la couche intercalaire en son entier étant garantie.

5. Jupe selon la revendicaiton 2,
**caractérisée en ce que**
un voile (3), par exemple en feutre, est placé derrière la couche intercalaire (2).

6. Procédé pour fabriquer une jupe multicouche d'un soufflet pour un couloir flexible de communication avec une couche intercalaire résistante aux coupures a l'aide d'une calandre,
**caractérisé en ce que**
la couche intercalaire (2) en filaments métalliques ou en fibres synthétiques est doublée pendant son passage dans la calandre.

7. Procédé selon la revendicaiton 6,
**caractérisé en ce que**
la couche intercalaire (2) est doublée d'un côté par un tissu enduit (1) et de l'autre par un voile (3), p.e. en feutre.

8. Procédé selon la revendicaiton 6,
**caractérisé en ce que**
le voile (3) est retiré après le passage dans la calandre.
